# EUROPÄISCHE PATENTSCHRIFT

(11) **EP 0 514 684 B1**
(45) Veröffentlichungstag und Bekanntmachung des Hinweises auf die Patenterteilung: **07.12.1994**
(21) Anmeldenummer: 92107016.5
(22) Anmeldetag: 24.04.1992
(51) Int. Cl.: F24D 3/14

(54) **Montageplatte für Schlauchleitungen.**
Mounting plate for hose conduits.
Plaque de montage pour des conduites flexibles.

(30) Priorität: 24.05.1991 DE 4116956; 22.01.1992 DE 4201552; 22.01.1992 DE 4201553
(43) Veröffentlichungstag der Anmeldung: 25.11.1992
(73) Patentinhaber: Lampka, Bruno, D-87437 Kempten (DE)
(72) Erfinder: Lampka, Bruno, D-87437 Kempten (DE)
(74) Vertreter: Hübner, Hans-Joachim, Dipl.-Ing.

(56) Entgegenhaltungen:
- DE-U- 8 633 484

## Beschreibung

Die Erfindung betrifft eine Montageplatte für eine schlangen- oder mäanderförmig zu verlegende Schlauchleitung, mit mehreren, in parallelen Reihen und rechtwinklig dazu liegenden Spalten angeordneten, gleichgroßen, kreisförmig oder polygonal konturierten Erhebungen auf einer Seite der Platte, wobei zwischen je zwei Reihen von Erhebungen ein über die ganze Plattenlänge reichender Längskanal und zwischen je zwei Spalten von Erhebungen ein über die ganze Plattenbreite reichender Querkanal gebildet ist und jeder der Kanäle zwischen je zwei Erhebungen eine Engstelle zum Einklemmen einer Schlauchleitung bildet, an die sich beidseitig trompetenartige Erweiterungsabschnitte anschließen und alle Engstellen dieselbe lichte Weite aufweisen.

Eine derartige Montageplatte ist aus der DE-U-86 33 484 bekannt. Diese Montageplatte bildet ein relativ enges Raster für die einzulegende Schlauchleitung. Sie besteht aus einer rechteckigen Grundplatte aus Schaumstoff und die Erhebungen sind einstückig angeformt. Die Engstellen zwischen je zwei Erhebungen haben eine lichte Weite, die etwa gleich dem Außendurchmesser der Schlauchleitung ist. Die bekannte Montageplatte ist für eine Fußbodenheizung oder eine Wandheizung, also für eine Verlegung der Schlauchleitung in einer Ebene gut geeignet. Probleme treten jedoch auf, wenn die Schlauchleitung in zwei rechwinklig zueinanderliegenden Ebenen verlegt werden muß. Dieser Fall kann einmal in Gebäudeecken auftreten, aber auch dann, wenn die Zu- und Ableitungsstränge der Schlauchleitung rechtwinklig zur Heizschlangenebene verlaufen müssen. Eine solche Schlauchverlegung würde bei der bekannten Montageplatte ein nachträgliches Bohren oder Ausschneiden von Löchern erfordern.

Eine etwas andere Montageplatte zeigt die EP-A-360889. Sie weist ein Längsnutensystem mit an den Enden vorgesehenen Quernuten auf. Eine Rohrschlange wird in das Nutensystem eingelegt. Die Anschlüsse der Rohrleitung liegen in der Rohrschlangenebene.

Die DE-U-7803514 beschreibt eine Montageplatte ähnlicher Art, bei der die Enden eines Parallel-Nutensystems durch sich über einen Bogenwinkel von über 180° erstreckende Bögen miteinander schlangenförmig verbunden sind. Die Zahl der Variationsmöglichkeiten für die Verlegung der Schlauchleitung ist gering. Die Verlegung ist auch hier nur in einer Ebene möglich.

Aufgabe der Erfindung ist es, die eingangs genannte Montageplatte so auszubilden, daß eine Übereck-Verlegung von Montageplatten möglich ist und die Schlauchleitung ohne nachträgliche Anpassungsarbeiten an den Platten aus einer Verlegungsebene in eine dazu winklig liegende weitere Verlegungsebene mit Zwangsführung in den Übergangsbereichen verlegt werden kann.

Diese Aufgabe wird erfindungsgemäß dadurch gelöst, daß jeder Kanal an mindestens einem Plattenrand unter stetiger Vergrößerung der Kanaltiefe in eine, an der Plattenstirnseite verlaufende und sich über die ganze Dicke der Platte bis zur Plattenrückseite erstreckende Nut übergeht.

Dank der in den Stirnflächen eingearbeiteten Nuten mit einer Tiefe etwa gleich der Kanäle an der Oberseite der Platte und einer Breite etwa gleich der lichten Weite einer Engstelle zwischen zwei Erhebungen, kann die Schlauchleitung an einem Plattenrand aus der Verlegeebene abgebogen und zur Plattenrückseite geführt werden. Wegen der stetigen Vertiefung der Kanäle im Bereich des Plattenrandes werden gewölbte Übergangsflächen geschaffen, die jeweils den Kanalboden mit dem zugehörigen Nutboden verbinden. Die Schlauchleitung kann also im Bereich der Abbiegung nicht geknickt werden.

Die erfindungsgemäße Montageplatte läßt sich sehr vorteilhaft zum Aufbau einer Raumwand- oder Bodenheizung aber auch im Ofenbau einsetzen. Im ersten Fall weist die Platte mindestens eine aus zementgebundenem Holzfasermaterial bestehende Deckschicht auf und im zweiten Fall besteht die Montageplatte vorzugsweise aus Schamotte.

Die Zeichnung veranschaulicht ein Ausführungsbeispiel der Erfindung.

Es zeigt:
- FIG 1: eine Ansicht der Platte und
- FIG 2: eine Stirnansicht der Platte gemäß FIG 1 mit einem Abschnitt einer rechtwinklig angesetzten weiteren Platte.

Die in der Zeichnung veranschaulichte Platte 10 ist quadratisch konturiert und weist eine Anzahl kreisförmiger Vorsprünge oder Erhebungen 12 auf, deren Oberflächen eben sind und in einer gemeinsamen zur Rückseitenfläche 14 der Platte 10 parallelen Ebene liegen. Die Erhebungen 12 sind in einer Anzahl Reihen und dazu rechtwinklig stehender Spalten angeordnet. Jede Erhebung 12 hat von benachbarten Erhebungen 12 sowohl in Reihenrichtung als auch in Spaltenrichtung einen konstanten Abstand, so daß zwischen je zwei Reihen von Erhebungen 12 ein Längskanal 18 gebildet wird, der über die ganze Plattenlänge reicht, während zwischen zwei dazu rechtwinklig verlaufenden Spalten von Erhebungen 12 jeweils ein Querkanal 20 gebildet wird, der in der Form dem Längskanal 18 genau entspricht und lediglich gegenüber diesem um 90° gedreht angeordnet ist. Die Breite jedes der Kanäle 18, 20 verändert sich über deren Länge ständig. In den Bereichen, wo sich die Konturen zweier benachbarter Erhebungen 12 am nächsten kommen, werden Engstellen 16 gebildet. Von diesen Engstellen verbreitern sich die Kanäle 18, 20 nach beiden Seiten trompetenförmig und münden dann jeweils in die dazu rechtwinkligen Kanäle ein. Die benachbart der vier Ränder der Platte 10 angeordneten Erhebungen 12 haben vom jeweils benachbarten Rand einen Minimalabstand, der gleich der Hälfte des Abstandes zweier Erhebungen im Bereich der Engstelle 16 ist. Werden also mehrere Platten 12 aneinandergesetzt, so ergibt sich am Stoß ein Kanal, der den Kanälen 18, 20 gleicht. Mit den Platten 10 kann nun durch Aneinanderfügen und Befestigen an einer Tragwand ein Plattenbelag gebildet werden, der ein Kanalsystem 18, 20 aufweist, welches eine große Vielfalt an Verlegungsmustern für eine Heizleitung 22 aufweist. Die Höhe der Erhebungen 12, deren Durchmesser und deren Abstand im Bereich der Engstellen 16 sind nun genau auf die Dimensionen der Leitung 22 abgestimmt. Die Höhe der Erhebungen 12, die ja die Tiefe der Kanäle 18, 20 bestimmt, ist gleich dem Durchmesser der Leitung 22. Eine etwas größere Tiefe schadet nicht. Der Abstand zweier Erhebungen 12 im Bereich der Engstellen 16 ist geringfügig kleiner als der Leitungsdurchmesser. Dieses Untermaß beträgt im Ausführungsbeispiel 5%. Dank dieses Untermaßes wird die Leitung 22 beim Einlegevorgang an den Engstellen 16 elastisch verformt. Dazu ist ein entsprechender Druck erforderlich, der je nach Steifigkeit der Leitung 22 mit der Hand oder durch den Schlag eines Werkzeuges bewirkt werden kann. Die Leitung 22 wird also zwischen je zwei Erhebungen 12 kraftschlüssig eingeklemmt. Der Durchmesser der Erhebungen 12 ist mindestens gleich dem doppelten zulässigen Biegeradius der Leitung 22. Damit dient die Umfangsfläche einer Erhebung 12 als Führungsfläche für das Biegen der Leitung um 90° bzw. 180° oder auch 270°, so daß beliebige schlangenförmige oder mäanderförmige Verlegungen möglich sind.

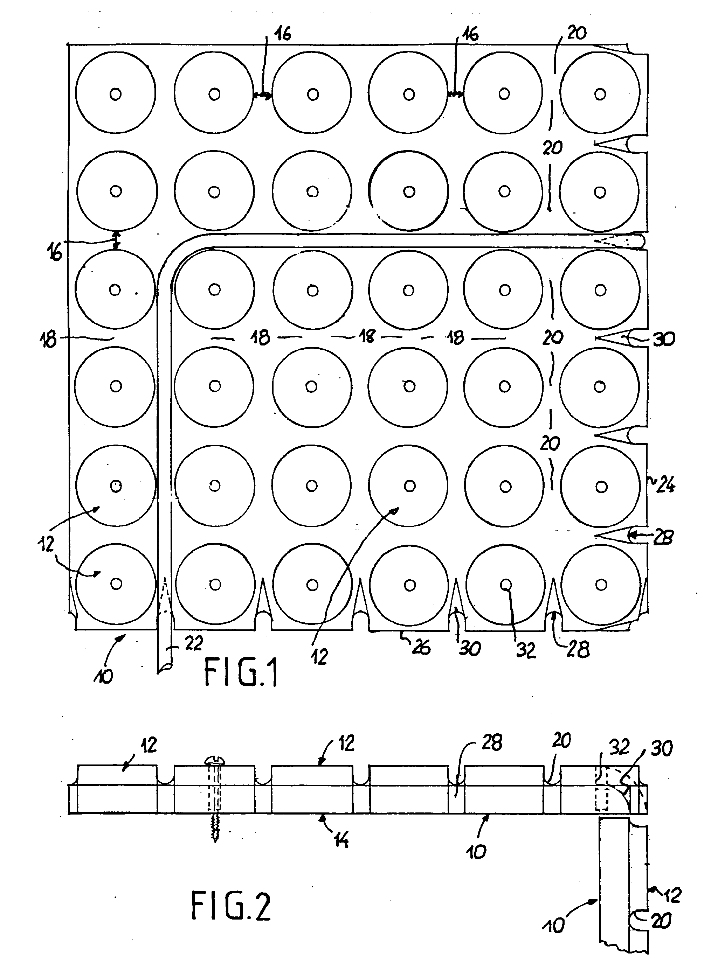

Zwei rechtwinklig zueinander liegende Ränder der Platte 10, nämlich die Ränder 24, 26 weisen stirnseitige Nuten 28 auf, die jeweils mit einem der Kanäle 18, 20 in Längsrichtung bzw. in Querrichtung ausgefluchtet sind. Die jeweiligen Kanäle 18, 20 vertiefen sich ab derjenigen Engstelle 16, die dem Rand benachbart ist und zwar nimmt diese Vertiefung stetig zu und mündet dann in der Nut 28, die sich über die ganze Dicke der Platte 10 erstreckt und an der Rückseitenfläche 14 der Platte 10 mündet. Der Nutboden geht also entlang der gewölbten Übergangsfläche unter Bildung eines Zwickels 30 stetig in den Kanalboden über. Dank dieser Ausbildung kann die Leitung 22 benachbart eines Plattenrandes um 90° rechtwinklig zur Zeichenebene umgebogen werden und verläuft dann an der Plattenstirnseite in der Nut 28. Werden also zwei Platten 10 übereck angeordnet, wie dies FIG 2 zeigt, so kann die Leitung 22 in zwei winklig zueinander stehenden Ebenen verlegt werden.

Zur Befestigung der Platte 10 an einer Wand weisen die Erhebungen 12 zentrale Löcher 32 auf, die im Ausführungsbeispiel als Sacklöcher ausgebildet sind, deren dünnwandige Böden von einer Schraube durchstoßen werden können.

Statt der quadratischen Platten 10 können auch Rechteckplatten verwendet werden, die dann vorzugsweise ein Längen- Breiten- Verhältnis von 2:1 aufweisen. Die Platten 10 bestehen im Ausführungsbeispiel aus feuerfestem Material, z.B. Schamotte und werden im Ofenbau eingesetzt, um z.B. die Wärme einer beheizten Wand auf das in dem verlegten Leitungssystem zirkulierende Wasser zu übertragen. Genauso gut ist es aber auch möglich, die Wand eines nicht beheizten Kachelofens mit Warmwasser aus der Heizanlage zu erwärmen.

Im Ausführungsbeispiel wird ein hochtemperaturfester Schlauch verwendet, der einen Außendurchmesser von 10,5mm aufweist und dessen Wandstärke 1,25mm beträgt. Der Abstand zweier Erhebungen 12 im Bereich der Engstellen 16 beträgt dann 10,0mm. Das für die Einklemmung des Schlauches 22 zur Verfügung stehende Untermaß beträgt dann 0,5mm und bezogen auf den Schlauchdurchmesser ca. 5%. Wegen der zähelastischen Eigenschaft des Schlauches reicht dieses geringe Untermaß für die sichere Einklemmung des Schlauches aus.

Die in Längs- und in Querrichtung völlig gleichmäßig verteilten Erhebungen 12 ermöglichen nicht nur eine Vielzahl von Leitungsverlegungsmustern, sondern tragen maßgeblich zur Haftungssicherheit des nachträglich aufzubringenden Putzes bei. Im Bereich der Kanäle 18, 20 ist die Putzdicke verstärkt. Diese Verstärkungen sind aber völlig gleichmäßig über die Platte verteilt. Entsprechend verteilen sich auch die thermischen Spannungen. Die lokale Abspaltungsgefahr des Putzes wird somit maßgeblich verringert.

Die beschriebene Platte läßt sich genauso gut auch zur Herstellung einer Wand- oder Bodenheizung für Gebäuderäume einsetzen. In diesem Fall werden die Platten großformatiger hergestellt und zwar vorzugsweise aus zementgebundenem Holzfaser- oder -spänematerial. Solche Platten sind unter dem Handelsnamen Heraklit bekannt. Vorzugsweise sind diese Platten schon herstellerseitig mit einer rückseitigen Wärmeisolierschicht versehen, die an der Rückseite mit einer Tragplatte abgeschlossen ist.

Es ergibt sich dann eine dreischichtige Bauweise, wobei die eigentliche Platte 10, die für den Putzauftrag bestimmt ist, die Decklage bildet. Mischt man bei der Herstellung der Platte 10 dem Zement und den Holzfasern noch Metallfasern oder -späne bei, so wird die Wärmeleitfähigkeit der Platte 10 erhöht. Die Temperaturverteilung über die Platte wird gleichmäßiger und die Wärmeübertragung wird verbessert.

## Patentansprüche

1. Montageplatte für eine schlangen- oder mäanderförmig zu verlegende Schlauchleitung, mit mehreren, in parallelen Reihen und rechtwinklig dazu liegenden Spalten angeordneten, gleichgroßen, kreisförmig oder polygonal konturierten Erhebungen (12) auf einer Seite der Platte (10) , wobei zwischen je zwei Reihen von Erhebungen (12) ein über die ganze Plattenlänge reichender Längskanal (18) und zwischen je zwei Spalten von Erhebungen (12) ein über die ganze Plattenbreite reichender Querkanal (20) gebildet ist und jeder der Kanäle (18, 20) zwischen je zwei Erhebungen (12) eine Engstelle (16) zum Einklemmen der Schlauchleitung (22) bildet, an die sich beidseitig trompetenartige Erweiterungsabschnitte anschließen und alle Engstellen (16) dieselbe lichte Weite aufweisen, dadurch gekennzeichnet, daß jeder Kanal (18, 20) an mindestens einem Plattenrand unter stetiger Vergrößerung der Kanaltiefe in eine, an der Plattenstirnseite verlaufende und sich über die ganze Dicke der Platte (10) bis zur Plattenrückseite erstreckende Nut (28) übergeht.

2. Montageplatte nach Anspruch 1, dadurch gekennzeichnet, daß wenigstens einige der Erhebungen (12) ein zentrales durchgehendes Loch oder durchstoßbares Sackloch (32) aufweisen.

3. Montageplatte nach Anspruch 1 oder 2, dadurch gekennzeichnet, daß sie aus Schamotte besteht und für den Ofenbau bestimmt ist.

4. Montageplatte nach Anspruch 1 oder 2, dadurch gekennzeichnet, daß sie aus Zement-gebundenem Holzfasermaterial besteht, dem vorzugsweise Metallfasern und/ oder -späne beigemischt sind.

## Claims

1. Mounting plate for a hose pipe to be arranged in serpentine or meandering form, comprising a plurality of circularly or polygonally contoured projections (12) arranged in parallel rows and columns at right angles therewith at one side of the plate (10), whereby between each two rows of projections (12) a longitudinal channel (18) is formed extending along the overall length of the plate and a transverse channel (20) is formed between each pair of columns of projections (12) extending along the overall width of the plate and each one of the channels (18, 20) has a narrow (16) between each pair of projections (12) for clamping the hose pipe (22), at both sides thereof enlargements of trumpet shape being associated and all narrows (16) have the same inner width, **characterized in** **that** each channel (18, 20) at least at one plate edge runs into a groove (28) by continuously increasing the channel depth, the groove arranged at an edge surface and extending along the overall thickness of the plate (10) onto the back side of the plate.

2. Mounting plate accoring to claim 1, **characterized in that** at least several projections (12) are provided with a passing central hole or with a breakable blind hole.

3. Mounting plate according to claim 1 or 2, **characterized in that** it consists of chamotte and provided for construction of stoves.

4. Mounting plate according to claim 1 or 2, **characterized in that** it consists of cement-bounded wood fibre material, preferably metal fibres and/or metal chips mixed thereto.

## Revendications

1. Plaque de montage pour une conduite en tuyau à poser en forme de serpentins ou de méandres comportant des élévations (12) de dimensions identiques, de contours circulaires ou polygonaux, disposées en plusieurs rangées parallèles et colonnes disposées à l'angle droit par rapport à ces dernières, d'un côté de la plaque (10), entre chaque paire de rangées d'élévations (12) un canal longitudinal (18) s'étendant pardessus toute la longueur de la plaque et entre chaque paire de colonnes d'élévations (12) un canal transversal (20) s'étendant par-dessus toute la largeur de la plaque étant formés et chacun des canaux (18, 20) formant entre les élévations (12) un étranglement (16) pour coïncer la conduite en tuyau (22), qui est suivi de chaque côté par des sections s'évasant à la manière de trompètes, tous les étranglements (16) présentant la même ouverture, caractérisée en ce que chaque canal (18, 20) débouche à au moins un bord de plaque en agrandissant de manière continue la profondeur du canal dans une rainure (28) s'étendant le long de la face avant de la plaque et par dessus toutes l'épaisseur de la plaque (10) jusqu'à la face arrière de la plaque.

2. Plaque de montage selon la revendication 1, caractérisée en ce que au moins une des élévations (12) présente un trou traversant central ou un trou préfiguré (32) que l'on peut percer.

3. Plaque de montage selon les revendications 1 ou 2, caractérisée en ce qu'elle consiste en aigile réfractaire et est destinée à la construction de fours.

4. Plaque de montage selon les renvendications 1 ou 2, caractérisée en ce qu'elle consiste en un matériau de fibres de bois lié par ciment auquel sont ajoutés de préférence des fibres de métal et/ou des copeaux de métal.
